# EUROPEAN PATENT APPLICATION

(11) **EP 3 048 788 A1**
(43) Date of publication of application: **27.07.2016**
(21) Application number: 13882540.1
(22) Date of filing: 22.11.2013
(51) Int. Cl.: H04N 5/232

(54) **SHOOTING METHOD AND APPARATUS**

(30) Priority: 22.09.2013 CN 201310432206
(71) Applicant: ZTE Corporation, Guangdong Province 518057 (CN)
(72) Inventor: TANG, Libo, Shenzhen Guangdong Province 518057 (CN)
(74) Representative: Novagraaf Technologies
(86) International application number: PCT/CN2013/087688
(87) International publication number: WO 2014/169655

(57) **Abstract**

Provided is a shooting method and device, wherein the method includes that one or more continuous frame pictures of a preview image of a to-be-shot scenario are obtained; whether the one or more continuous frame pictures include predetermined characteristics is detected; and when a detection result is yes, a camera is limited from shooting the to-be-shot scenario. The present disclosure solves a problem caused by that a content displayed by a display is easily shot, prevents a file displayed by the display from being shot and leaked, and improves data protection.

## Description

### Technical Field

The present disclosure relates to the field of communications, particularly to a shooting method and device.

### Background

A shooting function, which is originally of little importance and has become a top priority now as a subsidiary function of a mobile device, has become an indispensable basic function in the mobile device nowadays and a convenient shooting function may be provided to a user. As technologies increase gradually, a camera function of a mobile device is also improving and has reached or even surpassed shooting levels of some digital cameras, while almost all people have at least more than one mobile device having a shooting function nowadays to shoot pictures easily and record everything around whenever and wherever.

However, a shooting function of a mobile device also brings troubles to people's life in some aspects while bringing great convenience, such as an information security problem caused by the shooting function of the mobile device. In an era of electronic information, a variety of confidential commercial information is stored in computers, and inestimable loss may be caused to enterprises and individuals by loss of the information. Therefore, all enterprises are taking all kinds of measures to prevent information loss, such as measures including prohibition of transmission, prohibition of copying, prohibition of a screenshot, prohibition of modification of an encrypted document, addition of a watermark and so on. However, information of an encrypted document is necessarily displayed on a display regardless of any prevention, while a content of the encrypted document can be easily shot into a mobile device by a shooting function of the carried mobile device, and can be carried to any place and transmitted by any method. Thus, any prevention measure on the encrypted document is useless in the presence of the shooting function of the mobile device.

At present, there is no effective solution yet to solve a problem caused by that a content displayed by a display is easily shot in the related art.

### Summary

The present disclosure provides a shooting method and device, so as to at least solve a problem caused by that a content displayed by a display is easily shot in the related art.

A shooting method is provided according to an aspect of embodiments of the present disclosure, including that: one or more continuous frame pictures of a preview image of a to-be-shot scenario are obtained; whether the one or more continuous frame pictures include predetermined characteristics is detected; and when a detection result is yes, a camera is limited from shooting the to-be-shot scenario.

Preferably, the predetermined characteristic may include a characteristic of a display, wherein the characteristic of the display includes at least one of the followings: a shape characteristic of the display, and a display screen characteristic of the display.

Preferably, the display screen characteristic of the display may include one of the followings: alternating strips, and a moiré pattern.

Preferably, when the plurality of continuous frame pictures of the preview image of the to-be-shot scenario are obtained, that whether the plurality of continuous frame pictures include the predetermined characteristics is detected may include that: whether each of the plurality of continuous frame pictures includes the predetermined characteristic and the predetermined characteristics in the plurality of continuous frame pictures change according to a preset rule is detected.

Preferably, that the camera is limited from shooting the to-be-shot scenario may include at least one of the followings: a shooting function of the camera on the to-be-shot scenario is prohibited; and fuzzy processing is performed on a camera-shot image/video of the to-be-shot scenario.

Preferably, that the fuzzy processing is performed on the camera-shot picture/video of the to-be-shot scenario may include that: fuzzy processing is performed on a part containing the predetermined characteristic in the image/video.

Preferably, when the predetermined characteristic is the characteristic of the display, that whether the one or more continuous frame pictures include the predetermined characteristics is detected may include that: characteristics of the one or more continuous frame pictures are extracted; and whether at least some of the characteristics of the one or more continuous frame pictures are consistent with the predetermined characteristics is judged.

Preferably, that the characteristics of the one or more continuous frame pictures are extracted may include that: normalization processing is performed on the frame picture/pictures respectively to obtain grayscale pictures of the frame picture/pictures; and the characteristics of the frame picture/pictures are determined according to the grayscale pictures.

A shooting device is further provided according to another aspect of the embodiments of the present disclosure, including: an obtaining component configured to obtain one or more continuous frame pictures of a preview image of a to-be-shot scenario; a detecting component configured to detect whether the one or more continuous frame pictures include predetermined characteristics; and a limiting component configured to limit, when a detection result is yes, a camera from shooting the to-be-shot scenario.

Preferably, the limiting component may be further configured to prohibit a shooting function of the camera on the to-be-shot scenario; and/or perform fuzzy processing on a camera-shot image/video of the to-be-shot scenario.

By means of the embodiments of the present disclosure, one or more continuous frame pictures of a preview image of a to-be-shot scenario are obtained; whether the one or more continuous frame pictures include predetermined characteristics is detected; and when a detection result is yes, a camera is limited from shooting the to-be-shot scenario. The present disclosure solves a problem caused by that a content displayed by a display is easily shot, prevents a file displayed by the display from being shot and leaked, and improves data protection.

### Brief Description of the Drawings

The accompanying drawings illustrated herein are used for providing further understanding to the present disclosure and form a part of the present application. The schematic embodiments of the present disclosure and description thereof are used for explaining the present disclosure, instead of forming improper limitation thereto. In the accompanying drawings:
Fig. 1 is a flowchart of a shooting method according to an embodiment of the present disclosure;
Fig. 2 is a structural diagram of a shooting device according to an embodiment of the present disclosure;
Fig. 3 is a schematic diagram of a principle of generation of a moiré pattern according to a preferred embodiment of the present disclosure;
Fig. 4 is a schematic diagram of a moiré pattern according to a preferred embodiment of the present disclosure; and
Fig. 5 is a flowchart of a shooting method according to a preferred embodiment of the present disclosure.

### Detailed Description of the Embodiments

It needs to be noted that the embodiments in the present application and the characteristics in the embodiments may be combined with each other if there is no conflict. The present disclosure will be expounded hereinafter with reference to the accompanying drawings and in combination with the embodiments.

The steps illustrated in the flowcharts of the accompanying drawings may be executed in computer system, such as a group of computer executable instructions. Furthermore, although logical sequences have been illustrated in the flowcharts, the steps as illustrated or described may be executed according to sequences different from those herein in some cases.

The present embodiment provides a shooting method. The shooting method may be applied in a device having a shooting function, and the device should be provided with an extensible processor. The processor is capable of implementing a predetermined function or a function of a predetermined functional component. For example, the device may be a digital camera, a digital video recorder, a smart phone having a camera, or other camera devices or portable camera devices having a processor.

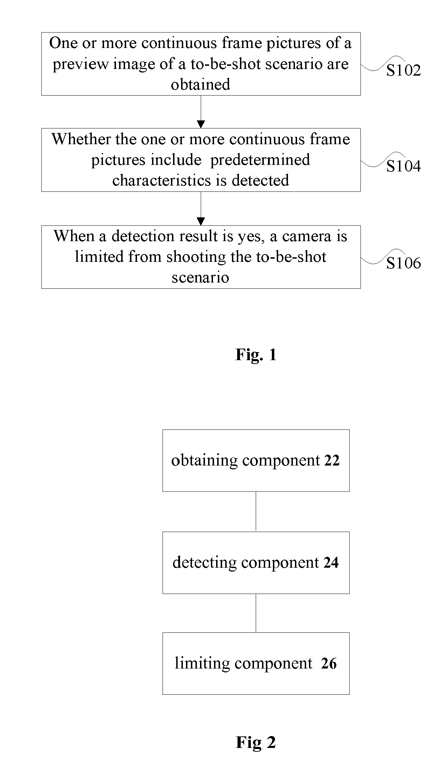

Fig. 1 is a flowchart of a shooting method according to an embodiment of the present disclosure. As shown in Fig. 1, the flow may include the following steps.

Step 102: One or more continuous frame pictures of a preview image of a to-be-shot scenario are obtained.

Step 104: Whether the one or more continuous frame pictures include predetermined characteristics is detected.

Step 106: When a detection result is yes, a camera is limited from shooting the to-be-shot scenario.

By means of the steps above, the characteristic of the preview image is compared with the predetermined characteristic, and a to-be-shot scenario having the predetermined characteristic is prohibited from being shot, thus preventing content in an image having the predetermined characteristic from being leaked. In a preferred embodiment, the predetermined characteristic is a display-related characteristic. In other words, the predetermined characteristic may be used for indicating that a working display (characteristics such as the shape of the display and the luminance of a display screen) exists in the to-be-shot scenario, thus the steps above can solve a problem caused by that the content displayed by a display is easily shot in the related art, thus preventing data displayed by the display from being shot or photographed, and improving data protection.

Preferably, shooting may be performed normally in the case that a judging result in Step 104 is no.

In Step 102, the preview image of the to-be-shot scenario refers to a preview image displayed by an electronic viewfinder or a viewfinder display screen. Generally, the preview image is acquired by a video memory or a memory and displayed on the electronic viewfinder or the viewfinder display screen in real time. During the acquisition, the preview image may be read from the video memory or the memory directly.

Preferably, the predetermined characteristic in the steps above may be set according to a scenario that actually requires shooting limitation. In the case that the present embodiment is applied in an application scenario of shooting limitation of a display screen, the predetermined characteristic may be a characteristic of a display, such as a shape characteristic of the display, and/or a characteristic of a display screen of the display, wherein the shape characteristic of the display may be the appearance of the display, the luminance of the display screen of the display, and other characteristics that can identify the display, including the contrast between the display screen and other parts of the display, and so on. The characteristic of the display screen of the display may be a characteristic of a special image formed by the display screen during a working process in a camera formed by an array type digital photosensitive element. For example, a screen is scanned in an interlaced manner at a predetermined frequency or scanned line by line and refreshed in a Cathode Ray Tube (CRT), and an interference pattern having alternating stripes will be formed in a camera formed by an array digital photosensitive element that acquires an image with a certain frequency. The alternating stripes may further serve as a display screen characteristic of the display to identify the display. For another example, a Liquid Crystal Display (LCD) or a Light Emitting Diode (LED) display forms an interference image of a moiré pattern in a camera formed by a digital photosensitive element and the moiré pattern may be also used as a display screen characteristic of the display to identify the display.

Preferably, whether a frame image has a static predetermined characteristic may be detected in one frame image, and besides, whether a plurality of frame images obtained continuously has a dynamic predetermined characteristic may be also detected. For example, in the preferred embodiment above, static characteristics including the moiré pattern, the alternative stripes may be detected, and in the meanwhile, the shape or location of the moiré pattern or the alternative stripes may change to a certain degree as each frame image is selected at different time. If the plurality of frame images are obtained continuously, it may be found that the shape and the location of the alternative stripes or the moiré pattern may change continuously with changes of a refreshing frequency of the display, changes of the distance between the camera and the display and so on. Therefore, whether a display exists in the to-be-shot scenario may be further detected accurately by detecting whether the predetermined characteristics exist in a plurality of continuous frame images and the predetermined characteristics in the plurality of continuous frame images change according to a preset rule.

Preferably, in an implementation process, in the case that the predetermined characteristic is the characteristic of the display, whether the plurality of continuous frame pictures includes the predetermined characteristic may be detected by using the following method: characteristics of the one or more continuous frame pictures are extracted; whether at least some of the characteristics of the one or more continuous frame pictures are consistent with the characteristic of the display is judged, and if so, it may be determined that the one or more continuous frame pictures include the predetermined characteristic of the display.

Preferably, in an implementation process, the characteristic of each of the one or more continuous frame pictures may be extracted according to the following method: normalization processing is performed on the one or more continuous frame pictures respectively to obtain a grayscale picture of the one or more continuous frame pictures; and the characteristic of the each of the one or more continuous frame pictures is determined according to the grayscale picture.

Preferably, that the camera is limited from shooting the to-be-shot scenario may include at least one of the followings: a shooting function of the camera on the to-be-shot scenario is prohibited; and fuzzy processing is performed on a camera-shot image/video of the to-be-shot scenario, wherein that the fuzzy processing is performed on the camera-shot picture/video of the to-be-shot scenario may include that: fuzzy processing is performed on a part containing the predetermined characteristic in the image/video. In other words, the fuzzy processing may be only performed on a corresponding position of the shot image/video on the display, so as to protect information of the area from being leaked.

Preferably, similar fuzzy processing may be also performed on an image of the preview image in the solution of the present embodiment so as to prompt a user of a shooting result of the fuzzy part.

The present embodiment further provides a shooting device. The shooting device may be the aforementioned device having a shooting function. The shooting device is configured to implement the shooting method. A specific implementation process of the device, which is described in a device embodiment, has been expounded in a method embodiment and will not be described repeatedly here.

Fig. 2 is a structural diagram of a shooting device according to an embodiment of the present disclosure. As shown in Fig. 2, the device includes: an obtaining component 22, a detecting component 24 and a limiting component 26, wherein the obtaining component 22 is configured to obtain one or more continuous frame pictures of a preview image of a to-be-shot scenario; the detecting component 24 is coupled to the obtaining component 22 and configured to detect whether the one or more continuous frame pictures include predetermined characteristics; and the limiting component 26 is coupled to the detecting component 24 and configured to limit, when a detection result is yes, a camera from shooting the to-be-shot scenario.

It needs to be noted that components and elements involved in the embodiments of the present disclosure may be implemented by means of software, and may be also implemented by means of hardware. The components and elements described in the present embodiment may be also arranged in a processor. For example, it may be described as follows: a processor, including the obtaining component 22, the detecting component 24 and the limiting component 26, wherein the names of these components do not limit the components themselves in some cases. For example, the obtaining component may be also described as "a component for obtaining one or more continuous frame pictures of a preview image of a to-be-shot scenario".

Preferably, the predetermined characteristic includes a characteristic of a display, wherein the characteristic of the display includes at least one of the followings: a shape characteristic of the display, and a display screen characteristic of the display.

Preferably, the display screen characteristic of the display includes one of the followings: alternating strips, and a moiré pattern.

Preferably, the detecting component 24 is further configured to detect, when the plurality of continuous frame pictures of the preview image of the to-be-shot scenario are obtained, whether each of the plurality of continuous frame pictures includes the predetermined characteristics and the predetermined characteristics in the plurality of continuous frame pictures change according to a preset rule.

Preferably, the detecting component 24 is further configured to, when the predetermined characteristic is the characteristic of the display, extract characteristics of the one or more continuous frame pictures; and judge whether at least some of the characteristics of the one or more continuous frame pictures are consistent with the characteristic of the display.

Preferably, that the characteristics of the one or more continuous frame pictures are extracted includes that: normalization processing is performed on the one or more continuous frame pictures respectively to obtain grayscale pictures of the one or more continuous frame pictures; and the characteristics of the one or more continuous frame pictures are determined according to the grayscale pictures.

Preferably, the limiting component 26 is configured to implement at least one of the following functions: a shooting function of the camera on the to-be-shot scenario is prohibited; and fuzzy processing is performed on a camera-shot image/video of the to-be-shot scenario.

Preferably, the limiting component 26 is further configured to perform fuzzy processing on a part containing the predetermined characteristic in the image/video.

Description and illustration will be provided below in combination with preferred embodiments.

A preferred embodiment of the present disclosure provides a method for preventing a mobile device from shooting a display. The method is applied to solving the problem of information security caused by a picture shot by a camera of a mobile device, such as leakage of information on a display shot by a mobile device.

The present preferred embodiment applies the following conception to prevent the mobile device from shooting the display of a computer: when the mobile device turns on a camera, and if it is detected that a shot object is the display of the computer, a shooting function of the mobile device is prohibited, thereby preventing confidential information in the computer from being leaked by the shooting function of the mobile device.

The method for preventing the mobile device from shooting the display of the computer according to the present embodiment includes that: when the shooting function of the mobile device is enabled, the shot object is detected, and the shooting function is prohibited if it is found that the shot object is the display.

Preferably, that the shooting function of the mobile device includes that: a camera function and a video recording function.

Preferably, that the shot object is detected refers to the whole process from the moment when the shooting function of the mobile device is enabled until the moment when the function is disenabled is performed continuously.

Preferably, the shot object includes the display, wherein the display includes a CRT display and an LCD.

Preferably, a method for detecting the shot object may include that: whether the shot object is the CRT display may be detected according to alternating stripes (depending on a display refreshing mechanism) that may be generated when the CRT display is shot, and whether the shot object is the LCD may be detected according to that a moiré pattern may be generated when the LCD is shot, and the shooting function may be prohibited in either case.

Preferably, that the shooting function is prohibited includes that a shooting functional button of the mobile device is prohibited, or a method of performing fuzzy processing on a shot image applied, and all methods, including, but not limited to the aforementioned methods, that can prevent an image from being recorded clearly, are applied.

Description will be provided below by taking a shot object being an LCD frequently used at present as an example.

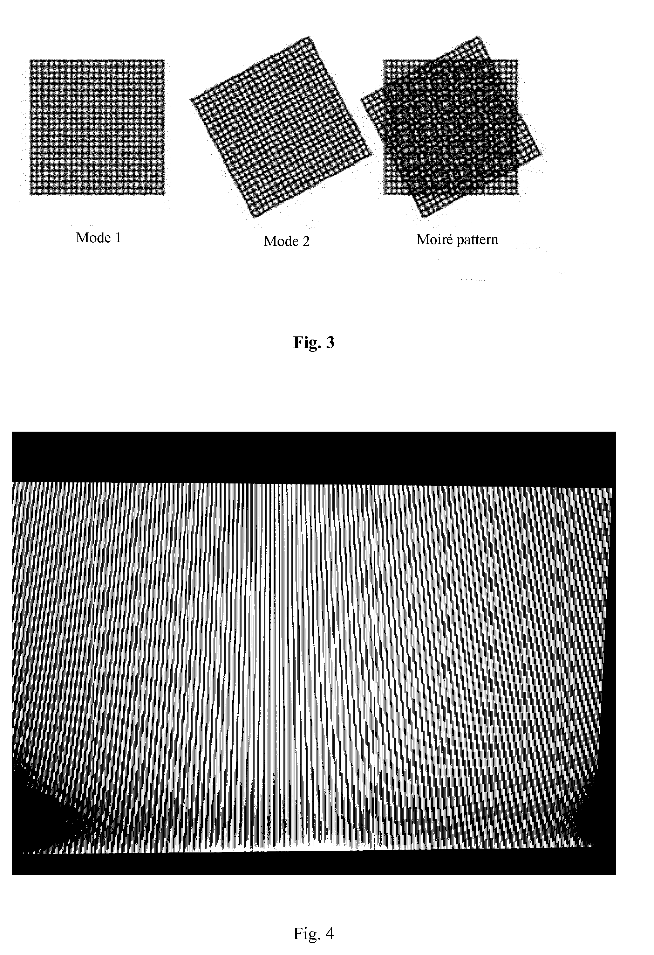

Fig. 3 is a schematic diagram of a principle of generation of a moiré pattern according to a preferred embodiment of the present disclosure. As shown in Fig. 3, when an LCD is shot by a mobile device, since a photosensitive element of a camera has a spatial frequency while a shot object (an image displayed by an LCD screen) is displayed by liquid crystal pixels of the LCD screen, the pixels of the LCD screen also have a spatial distribution rule. Fig. 4 is a schematic diagram of a moiré pattern according to a preferred embodiment of the present disclosure. When the spatial frequency of the photosensitive element of the mobile device is close to the spatial distribution rule of the image displayed by the LCD screen, a phenomenon of visual staying will be caused, and the moiré pattern as shown in Fig. 4 appears. In brief, when pixels of a sensor of the mobile device are close to or even overlapped with pixels of the display, human eyes are extremely sensitive to such overlapping, thus the moiré pattern may be seen.

The present preferred embodiment utilizes such a characteristic, and when the shooting function of the mobile device is enabled, software is started to perform real-time monitoring. A method for recognizing the moiré pattern is as follows: normalization processing is performed on images in an image video memory first to generate a grayscale picture, characteristic values of the grayscale picture and the moiré pattern are compared, and when the characteristic value of the grayscale picture is matched to the characteristic value of the moiré pattern, it is indicated that a picture displayed currently is a shot computer display. At the moment, the shooting function of the mobile device is prohibited from being used, thus preventing information leakage caused by the mobile device shooting the computer display.

The present preferred embodiment will be described below with reference to an accompanying drawing.

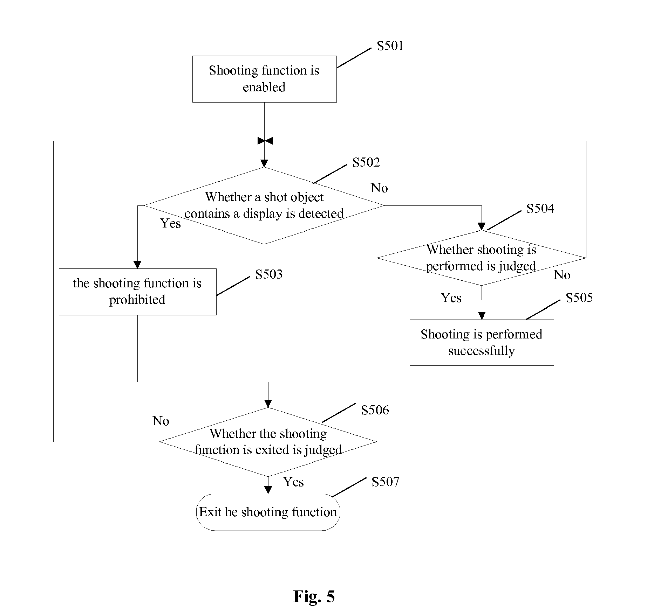

Fig. 5 is a flowchart of a shooting method according to a preferred embodiment of the present disclosure. As shown in Fig. 5, when a shooting function of a mobile device is enabled by a user, processing of the following steps may be performed.

Step 501: First, the shooting function of the mobile device is enabled.

Step 502: Whether a shot object contains a display is detected, and if soothe shot object contains a display, Step 503 is performed. Otherwise, Step 504 is performed.

Step 503: The shooting function is prohibited from being used, and Step 506 is performed.

Step 504: Whether shooting is performed is judged, if so, Step 505 is performed, and otherwise, Step 502 is performed.

Step 505: A photograph or a video is shot and Step 506 is performed.

Step 506: Whether the shooting function is exited is judged, if so, Step 507 is performed, and otherwise, Step 502 is performed.

Step 507: The shooting function is exited and the whole process is terminated.

It can be seen that the technical solution at least has the following advantages.

A shot object is judged during a shooting process of a mobile device, and when it is determined that the shot object is a display of a computer, the shooting function of the mobile device is prohibited. The method is simple and effective without affecting normal use of the mobile device. The shooting function of the mobile device, especially, can be still used normally without any influence when the mobile device having functions of the present embodiment or preferred embodiments is used for shooting a daily image, thus not only ensuring the security of internal information of enterprises, but also avoiding influence on normal use of the mobile device by individuals, so as to achieve two purpose.

### Industrial Applicability

A shooting method and device provided by the embodiments of the present disclosure can prevent data displayed by a display from being shot and leaked, thereby improving data protection.

Obviously, it should be understood by those skilled in the art that, the above components or steps of the present disclosure may be implemented a universal computing device. They may be centralized on a single computing device or distributed on a network composed of multiple computing devices. Alternatively, they may be implemented by a program code executable by a computing device. Therefore, they may be stored in a storage device and executed by the computing device. Or they may be implemented by respectively fabricating them into integrated circuit components, or by fabricating a plurality of components or steps of them into a single integrated circuit component. Therefore, the present disclosure is not limited to any specific combination of hardware and software.

What are described above are only preferred embodiments of the present disclosure, but are not for use in limiting the present disclosure, and for those skilled in the art, there may be various modifications and changes to the present disclosure. Any modification, equivalent replacement, improvement and the like made within the spirit and principles of the present disclosure should be included in the protection scope of the present disclosure.

## Claims

1. A shooting method, comprising:
obtaining one or more continuous frame pictures of a preview image of a to-be-shot scenario;
detecting whether the one or more continuous frame pictures include predetermined characteristics; and
when a detection result is yes, limiting a camera from shooting the to-be-shot scenario.

2. The method according to claim 1, wherein the predetermined characteristic comprises a characteristic of a display, wherein the characteristic of the display comprises at least one of the followings:
a shape characteristic of the display, and a display screen characteristic of the display.

3. The method according to claim 2, wherein the display screen characteristic of the display comprises one of the followings:
alternating strips, and a moiré pattern.

4. The method according to claim 3, wherein when the plurality of continuous frame pictures of the preview image of the to-be-shot scenario are obtained, detecting whether the plurality of continuous frame pictures include the predetermined characteristics comprises:
detecting whether each of the plurality of continuous frame pictures comprises the predetermined characteristic and the predetermined characteristics in the plurality of continuous frame pictures change according to a preset rule.

5. The method according to claim 1, wherein limiting the camera from shooting the to-be-shot scenario comprises at least one of the followings:
prohibiting a shooting function of the camera on the to-be-shot scenario; and
performing fuzzy processing on a camera-shot image/video of the to-be-shot scenario.

6. The method according to claim 5, wherein performing the fuzzy processing on the camera-shot picture/video of the to-be-shot scenario comprises:
performing fuzzy processing on a part containing the predetermined characteristic in the image/video.

7. The method according to any one of claims 1 to 6, wherein detecting whether the one or more continuous frame pictures include the predetermined characteristics comprises:
extracting characteristics of the one or more continuous frame pictures; and
judging whether at least some of the characteristics of the one or more continuous frame pictures are consistent with the predetermined characteristics.

8. The method according to claim 7, wherein extracting the characteristics of the one or more continuous frame pictures comprises:
performing normalization processing on the one or more continuous frame pictures respectively to obtain grayscale pictures of the one or more continuous frame pictures; and
determining the characteristics of the one or more continuous frame pictures according to the grayscale pictures.

9. A shooting device, comprising:
an obtaining component configured to obtain one or more continuous frame pictures of a preview image of a to-be-shot scenario;
a detecting component configured to detect whether the one or more continuous frame pictures include predetermined characteristics; and
a limiting component configured to limit, when a detection result is yes, a camera from shooting the to-be-shot scenario.

10. The device according to claim 9, wherein the limiting component is further configured to prohibit a shooting function of the camera on the to-be-shot scenario; and/or perform fuzzy processing on a camera-shot image/video of the to-be-shot scenario.
